# EUROPÄISCHE PATENTSCHRIFT

(11) **EP 0 645 323 B1**
(45) Veröffentlichungstag und Bekanntmachung des Hinweises auf die Patenterteilung: **12.03.1997**
(21) Anmeldenummer: 94810482.3
(22) Anmeldetag: 23.08.1994
(51) Int. Cl.: B65G 47/31, B65G 47/88

(54) **Förderanlage zur Förderung von Hohlkörpern**
Conveying apparatus for the transport of hollow bodies
Appareil transporteur pour le transport de corps creux

(30) Priorität: 22.09.1993 DE 4332090
(43) Veröffentlichungstag der Anmeldung: 29.03.1995
(73) Patentinhaber: VTZ ENGINEERING + SERVICES AG, CH-6312 Steinhausen (CH)
(72) Erfinder: Egger, Walter C., CH-6353 Weggis (CH)
(74) Vertreter: Rottmann, Maximilian R.

(56) Entgegenhaltungen:
- EP-A- 0 519 401
- DE-A- 4 114 475
- GB-A- 1 017 071
- US-A- 3 020 997
- US-A- 4 096 939
- US-A- 4 793 461

## Beschreibung

Die vorliegende Erfindung betrifft eine Förderanlage zur Förderung von Hohlkörpern, insbesondere Flaschen, mit einem Hauptförderer, welcher für die stetige Förderung einer Folge von gegenseitig beabstandeten Hohlkörpern bestimmt ist und welcher mit die Hohlkörper ausschliesslich seitlich erfassenden Mitnehmerorganen ausgerüstet ist, sowie mit dem Hauptförderer ein- und auslaufseitig zugeordneten Anschlussförderern, welche für die stetige Förderung dicht aufeinanderfolgender Hohlkörper bestimmt sind.

Förderanlagen dieser Art sind in verschiedenen Ausführungen bekannt und werden beispielsweise in Maschinen zum Ausspritzen von Flaschen, sogenannten Rinsern, oder als Stockwerkförderer eingesetzt. In diesen und ähnlichen Anwendungsfällen dient als Hauptförderer häufig ein sogenannter Schleppkettenförderer, welcher mit zwei in seitlichem Abstand voneinander gleichsinnig laufenden Förderketten ausgerüstet ist, an denen gegeneinander gerichtete, einen Förderkanal begrenzende Mitnehmer mit elastischen Greifern angebracht sind. Als Anschlussförderer kommen bei solchen Anlagen Förderbänder zum Einsatz, auf welchen die Flaschen stehend befördert werden, wobei entlang den Förderbändern im allgemeinen seitliche Führungen für die Flaschen angebracht sind.

In der Regel weist die Förderbahn des Hauptförderers in den genannten Anwendungsfällen nebst geradlinigen auch vertikal gekrümmte Bahnabschnitte auf. Beim Durchgang der Flaschen durch vertikal gekrümmte Bahnabschnitte verlaufen die Längsachsen der aufeinanderfolgenden Flaschen radial zueinander, weshalb es notwendig ist, einen gewissen gegenseitigen Abstand der Flaschen einzuhalten. Im Falle eines Schleppkettenförderers ist dieser Abstand jedoch nur bedingt regelmässig. Um einen wenigstens annähernd regelmässigen Abstand der Flaschen zu erreichen, ist es üblich, die Flaschen im einlaufseitigen Anschlussförderer ohne Lücken dicht an dicht zu fördern, wobei die Fördergeschwindigkeit des Hauptförderers gegenüber derjenigen des Anschlussförderers soweit erhöht wird, dass sich der gewünschte Flaschenabstand einstellt. Im auslaufseitigen Anschlussförderer können bei entsprechend verminderter Fördergeschwindigkeit die Flaschen wiederum relativ dicht aneinander stehen.

Da ein solcher Schleppkettenförderer oder ein gleichartig arbeitender Hauptförderer die zu fördernden Flaschen jeweils nur seitlich erfasst, ist die Lage, welche die Flaschen im Förderbereich des Hauptförderers einnehmen und in der sie diesen verlassen, einzig bestimmt durch die Lage, in der die Flaschen dem Hauptförderer vom einlaufseitigen Anschlussförderer übergeben werden. Auf dem Transportband dieses Anschlussförderers werden die Flaschen in aufrechter Stellung befördert. Im Übergabebereich zum nachfolgenden Hauptförderer findet infolge der höheren Fördergeschwindigkeit des letzteren eine Vereinzelung der Flaschen statt, d.h. eine vom Hauptförderer erfasste Flasche wird von der jeweils nachfolgenden Flasche getrennt. Durch diese Trennung verliert die nunmehr vorderste Flasche im Verband der dicht an dicht auf dem Transportband stehenden Flaschen den vorderseitigen Halt, der sonst meist ausreicht, um eine ins Schwanken geratene Flasche am Kippen gegen die entfernte Flasche hin zu hindern. Es ist jedoch wichtig, dass die Flaschen in dieser Übergabephase ihre aufrechte Stellung jeweils beibehalten, bis sie vom Hauptförderer erfasst werden, damit die Flaschen den Hauptförderer in der gleichen räumlichen Orientierung wieder verlassen und in aufrechter Stellung vom Transportband des auslaufseitigen Anschlussförderers übernommen werden können. Dadurch ist im Falle des Einsatzes eines Hauptförderers dieser Art in einem Rinser auch gewährleistet, dass jede Flasche eine bestimmte, gleichbleibende Lage im Arbeitsbereich eines Ausspritzaggregats einnimmt.

In den Übergabereichen der Flaschen vom Hauptförderer zu den Anschlussförderern ergeben sich bei einer Förderanlage der eingangs genannten Art erfahrungsgemäss keine Schwierigkeiten, wobei in den Übergabebereichen keine zusätzlichen Hilfsmittel vorgesehen sein müssen, sofern die Flaschen eine für den Transport auf einem Transportband ausreichende Standfestigkeit haben. Glasflaschen erfüllen im allgemeinen diese Voraussetzung. Anders verhält es sich dagegen mit Flaschen aus Kunststoff (z.B. PET-Flaschen). Solche Flaschen verfügen nur über eine geringe Standfestigkeit, da sie nicht nur ein erheblich geringeres Gewicht als Glasflaschen haben, sondern häufig auch, zur Erzielung einer hinreichenden Druckfestigkeit, mit einem sternförmig gerippten Boden versehen sind, der demzufolge eine verminderte Standfläche aufweist. Flaschen mit geringer Standfestigkeit können aber, auf einem schnell laufenden Transportband stehend, als Folge von Erschütterungen leicht in eine Schräglage gelangen oder ganz umfallen, bevor sie vom Hauptförderer erfasst werden bzw. nachdem sie von diesem freigegeben werden. Dies betrifft nicht nur einzelne, sondern auch dicht an dicht stehende Flaschen, welche unter den genannten betrieblichen Verhältnissen reihenweise umfallen können,

Es sind bereits Massnahmen vorgeschlagen worden, die es ermöglichen, die beschriebenen Probleme generell zu lösen. Alle diese Vorschläge laufen jedoch darauf hinaus, Mittel vorzusehen, welche die Flaschen im ganzen Förderbereich, vor allem auch in den Übergabebereichen, in einer vorbestimmten Lage halten. Bekannt sind beispielsweise Förderanlagen, bei denen der Hauptförderer am Fördermittel positionierte Halterungen (z.B. Standbecher und Halsklammern) aufweist, welche die Flaschen in einer vorbestimmten Lage festhalten, wobei dem Hauptförderer geeignete Beschickungs- und Entnahmeeinrichtungen zugeordnet sind. Dazu gehören auf der Einlaufseite des Hauptförderers eine Eintaktvorrichtung, welche die Mittel zum Umsetzen der Flaschen in die Halterungen des Hauptförderers enthält, und auf der Auslaufseite eine Austaktvorrichtung mit Mitteln zur Entnahme der Flaschen aus den Halterungen. Solche Beschickungs- und Entnahmeeinrichtungen enthalten kostspielige, auf das jeweilige Flaschenformat abgestimmte Formatteile, welche einem hohen Verschleiss unterworfen und dementsprechend störanfällig sind, und erfordern normalerweise Personal zur Überwachung und Umrüstung auf andere Flaschengrössen. Der Gesamtaufwand für den Aufbau und den Betrieb des Hauptförderers und dessen Beschickungs- und Entnahmeeinrichtungen ist dementsprechend hoch. Ein ordnungsgemässer Betrieb einer Förderanlage dieser Art ist also nur mit aufwendiger Maschinentechnik und mit zahlreichen Formatteilen zu erreichen.

Da jedoch bei den in Betracht gezogenen Anwendungsfällen eine Lagesicherung der zu fördernden Flaschen nicht in dem oben angedeuteten Umfang erforderlich ist und diesbezügliche Probleme bei einer Förderanlage der eingangs genannten Art erfahrungsgemäss einzig in den Übergabebereichen und insbesondere bei der Förderung von Flaschen mit unzureichender Standfestigkeit auftreten, lohnt sich der mit der bekannten Förderanlage verbundene Aufwand nicht.

Der Erfindung liegt deshalb die Aufgabe zugrunde, eine Förderanlage der eingangs genannten Art derart weiterzubilden, dass auch Hohlkörper, insbesondere Flaschen mit geringerer Standfestigkeit sicher gefördert und vom einlaufseitigen Anschlussförderer an den Hauptförderer bzw. vom Hauptförderer an den auslaufseitigen Anschlussförderer übergeben werden können, ohne dass aufwendige Formatteile eingesetzt werden müssen.

Die Lösung dieser Aufgabe besteht erfindungsgemäss darin, dass in den Übergabebereichen vom einlaufseitigen Anschlussförderer zum Hauptförderer und vom Hauptförderer zum auslaufseitigen Anschlussförderer Hilfseinrichtungen angeordnet sind, welche die räumliche Orientierung der Hohlkörper für deren Eingabe in den jeweils nachfolgenden Förderer eindeutig festlegen.

Bevorzugte Ausführungsformen der Förderanlage sind in den abhängigen Ansprüchen 2 bis 21 definiert.

So ist bei einer bevorzugten Ausführungsform der Förderanlage vorgesehen, dass die im einlaufseitigen Übergabebereich angeordnete Hilfseinrichtung einen Förderer mit die Hohlkörper seitlich erfassenden Mitnehmern aufweist. Ein solcher, dem Hauptförderer vorgeschalteter Förderer stellt sicher, dass die auf dem Anschlussförderer transportierten Hohlkörper den vorderseitigen Halt nicht verlieren und dadurch nicht umfallen. Im weiteren wird durch die Förderanlage gewährleistet, dass die Hohlkörper durch die Mitnehmer weitgehend ohne Schlupf bewegt werden, und dass sie daher definiert dem Hauptförderer übergeben werden können.

Eine weitere, bevorzugte Ausführungsform der einlaufseitigen Hilfseinrichtung sieht vor, dass diese unter dem Förderdruck nachgebende Mittel zum Zurückhalten der Hohlkörper aufweist. Durch diese Rückhaltemittel, welche vorzugsweise als paarweise ober- und unterhalb der Bahn der Mitnehmerorgane des Hauptförderers angeordnete Federn ausgebildet sind, werden die Hohlkörper einerseits seitlich geführt und andererseits wird sichergestellt, dass die Hohlkörper bis zu einer bestimmten, durch die nachfolgenden Hohlkörper ausgeübten Kraft zurückgehalten werden bzw. dicht an dicht zu liegen kommen, und dass die Hohlkörper vertikal ausgerichtet und in gleichmässigen Intervallen an den bevorzugt mit höherer Geschwindigkeit laufenden Hauptförderer übergeben werden.

Eine weitere, bevorzugte Ausgestaltung der Förderanlage sieht zusätzlich vor, dass die Hilfseinrichtungen nur beim Einsatz der Förderanlage zur Förderung von Hohlkörpern mit für eine Bandförderung unzureichender Standfestigkeit wirksam sind. Dadurch eignet sich eine solchermassen ausgestaltete Förderanlage auch für den Transport von Hohlkörpern mit einer guten Standfestigkeit wie beispielsweise Glasflaschen.

Nachfolgend wird ein Ausführungsbeispiel der Erfindung anhand von Zeichnungen näher erläutert. In den Zeichnungen zeigen:
Fig. 1. eine schematische Seitenansicht einer bekannten Maschine zum Reinigen von Flaschen, mit einer gattungsgemässen Förderanlage;
Fig. 2. eine schematische Draufsicht der in Fig. 1 dargestellten Maschine zum Reinigen von Flaschen;
Fig. 3 eine schematische Seitenansicht einer erfindungsgemässen Förderanlage zum Reinigen von Flaschen;
Fig. 4. eine schematische Draufsicht der in Fig. 3 dargestellten Förderanlage zum Reinigen von Flaschen;
Fig. 5 eine schematische Seitenansicht des einlaufseitigen Flaschen-Übergabebereichs;
Fig. 6 eine schematische Draufsicht auf den einlaufseitigen Flaschen-Übergabebereich;
Fig. 7 eine schematische Seitenansicht auf den auslaufseitigen Flaschen-Übergabebereich;
Fig. 8 einen Schnitt entlang der Linie A-A in Fig. 7; und
Fig. 9 einen Schnitt entlang der Linie B-B in Fig. 7.

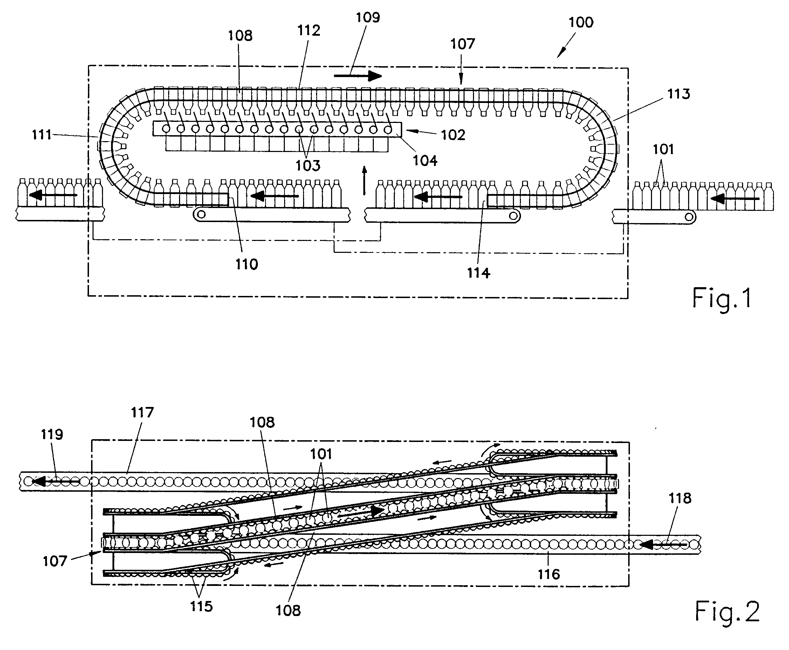

Die Fig. 1 und 2 zeigen schematisch eine Maschine 100 zum Reinigen von Flaschen 101 durch Ausspritzen derselben mit einer Reinigungsflüssigkeit. Eine solche, den Stand der Technik repräsentierende Maschine ist in der Fachwelt unter dem Begriff "Rinser" bekannt. Die dargestellte Maschine enthält ein Reinigungsaggregat 102 mit einer Mehrzahl von Vorrichtungen 103 mit unabhängig voneinander beweglichen Strahldüsen. Diese Vorrichtungen 103 haben einen festen Standort und sind in regelmässigen Abständen an einer Montageschiene 104 befestigt (Fig. 1). Die Maschine 100 umfasst eine an sich bekannte Fördereinrichtung in Form eines Schleppkettenförderers 107, welcher die Flaschen 101 in einer Reihe durch den Wirkungsbereich des Reinigungsaggregats 102 transportiert.

Der Schleppkettenförderer 107 weist zwei umlaufende Förderketten 108 auf, welche sich längs der Förderbahn parallel mit Abstand voneinander in Richtung des Pfeils 109 gleichsinnig bewegen. Die Förderbahn des Schleppkettenförderers 107 verläuft in Form einer vertikalen Schleife vom Einlaufende 110 in einem Bogenabschnitt 111 nach oben, dann längs eines geradlinigen Abschnitts 112 weiter in einer zur Einlaufrichtung entgegengesetzten Richtung und schliesslich in einem Bogenabschnitt 113 nach unten zum Auslaufende 114 (Fig. 1). Die Antriebs- und Führungsmittel für die Ketten 108 sind nicht dargestellt; die Laufrichtung der Ketten 108 ist durch kleine Pfeile markiert.

An den Förderketten 108 sind reihenweise angeordnete Mitnehmer 115 befestigt. Zwischen den beiden Förderketten 108 befindet sich der die Flaschen 101 aufnehmende Förderkanal, welcher durch die beiden Reihen der jeweils einander zugewandten Mitnehmer 115 seitlich begrenzt wird. An das Einlaufende 110 und an das Auslaufende 114 des Schleppkettenförderers 107 schliessen sich Anschlussförderer, z.B. Bandförderer 116 bzw. 117, für die Zufuhr und Wegfuhr der Flaschen 101 in der durch Pfeile 118 bzw. 119 angegebenen Richtung an. Die Bogenabschnitte 111 und 113 der Förderbahn des Schleppkettenförderers 107 sind gemäss Fig. 2 seitlich gegeneinander versetzt, so dass der geradlinige Bahnabschnitt 112 desselben schräg verläuft. Dadurch lassen sich die Bandförderer 116 und 117 in geradliniger Bahn auf das Einlaufende 110 bzw. auf das Auslaufende 114 des Schleppkettenförderers 107 ausrichten. Für die Übergabe der Flaschen 101 vom Bandförderer 116 auf den Schleppkettenförderer 107 und von diesem auf den Bandförderer 117 sind keine besonderen Mittel dargestellt.

Die zu reinigenden Flaschen 101 gelangen auf dem Bandförderer 116 in dichter Reihenfolge aufrechtstehend an das Einlaufende 110 des Schleppkettenförderers 107 und werden von diesem übernommen. Die Fördergeschwindigkeit des Schleppkettenförderers 107 ist höher als diejenige des Bandförderers 116, so dass die vom Schleppkettenförderer 107 erfassten Flaschen 101 einen gewissen Abstand voneinander haben.

Im oberen, geradlinigen Bahnabschnitt 112 werden die Flaschen 101 mit dem Flaschenkopf nach unten entlang des Reinigungsaggregats 102 bewegt, wobei jede Flasche nacheinander sämtliche Vorrichtungen 103 betätigt, so dass die jeweiligen Strahldüsen den Flaschen 101 zwangsläufig nachgeführt werden und dabei phasenweise auf die Flaschenöffnungen ausgerichtet sind, um den Spritzstrahl während dieser Nachführphasen auf den Flascheninnenraum einwirken zu lassen. Um eine einwandfrei Reinigung zu erzielen, ist es notwendig, dass die Flaschen 101 untereinander den gleichen Abstand aufweisen. Dazu müssen die Flaschen 101 im gleichen Takt vom Förderband 116 an den Schleppkettenförderer 107 übergeben werden bzw. von letzterem übernommen werden.

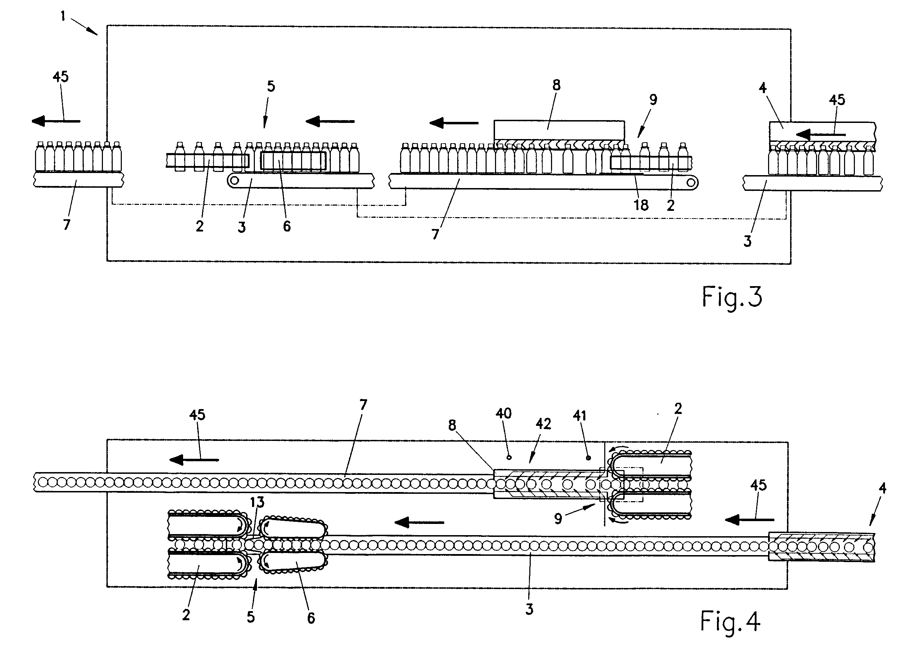

Die Fig. 3 und 4 zeigen schematisch in einer Seitenansicht und in einer Draufsicht eine Förderanlage 1, welche in einer Maschine der eingangs genannten Art eingesetzt werden kann, mit einem Hauptförderer 2 zum Transportieren von Hohlkörpern, in diesem Fall Flaschen 10, welcher wiederum als Schleppkettenförderer 2 ausgebildet ist. Der Verlauf des Schleppkettenförderers 2 vom Einlaufende zum Auslaufende ist zugunsten einer guten Übersichtlichkeit nicht dargestellt. Die hier dargestellte Förderanlage 1 eignet sich sowohl für das Fördern von Glasflaschen wie auch von Flaschen mit für eine Bandförderung ungenügender Standfestigkeit, wie z.B. PET-Flaschen und insbesondere auch PET-Flaschen mit einem sternförmig ausgestalteten Boden. Dazu sind gewisse Hilfseinrichtungen vorhanden, welche von einer Wirk- in eine Ruhestellung bewegt werden können, was nachfolgend noch detailliert erläutert wird.

In der durch Pfeile 45 angedeuteten Förderrichtung gesehen weist die Förderanlage 1 einlaufseitig einen pneumatischen Förderer 4, einen nachfolgenden, als Förderband ausgebildeten Anschlussförderer 3 sowie anschliessende Hilfseinrichtungen in Form eines zusätzlichen Förderers 6 und in Form von Rückhaltemitteln 13 auf. Der zusätzliche Förderer 6 und die Rückhaltemittel 13 sind im Flaschen-Übergabebereich vom Anschlussförderer 3 zum Hauptförderer 2 angeordnet und dienen einer definierten Übergabe der Flaschen an den Schleppkettenförderer 2.

Auslaufseitig sind im Flaschen-Übergabebereich 9 vom Schleppkettenförderer 2 zum Anschlussförderer 7 als Hilfseinrichtungen ein pneumatischer Förderer 8, aus den Fig. 3 und 4 nicht ersichtliche Rückhaltemittel sowie eine das Flaschenniveau bestimmende Platte 18 angeordnet. Um das Aufstauen der Flaschen 10 im auslaufseitigen, pneumatischen Förderer 8 zu überwachen, sind zwei Sensoren 40, 41 vorgesehen, wovon der eine die minimale Länge und der andere die maximale Länge der Stauzone 42 überwacht. Durch diese Sensoren 40, 41 wird über eine nachgeschaltete Elektronik die Geschwindigkeit des Schleppkettenförderers 2 geringfügig verlangsamt bzw. erhöht und damit die Länge der Stauzone 42 in etwa konstant gehalten.

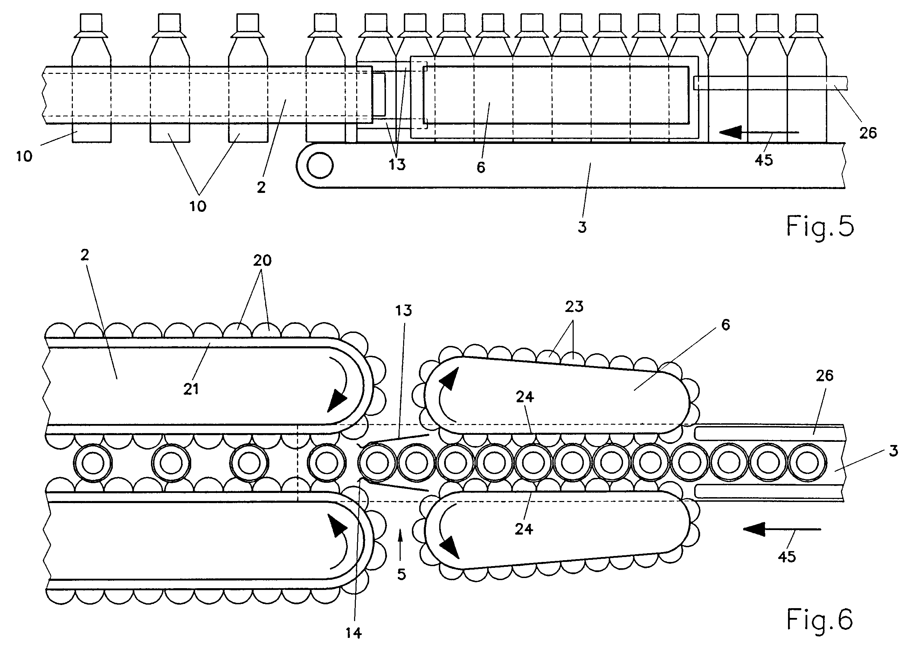

Die Fig. 5 und 6 zeigen schematisch in einer Seitenansicht und in einer Draufsicht, in gegenüber den Fig. 3 und 4 vergrösserten Darstellungen, den Übergabebereich 5 zwischen dem einlaufseitigen Anschlussförderer 3 und dem Schleppkettenförderer 2. Der im einlaufseitigen Übergabebereich 5 angeordnete, zusätzliche Förderer 6 ist als Seitenbandförderer ausgebildet, welcher quer zur Förderrichtung angeordnete Mitnehmer 23 aufweist, währendem die Rückhaltemittel 13 durch federnde Klammern gebildet sind. Die Mitnehmer 23 des Seitenbandförderers 6 sind elastisch verformbar und vorzugsweise quer zur Förderrichtung profiliert. Um die Flaschen 10 sicher zu Erfassen und möglichst vertikal auszurichten, sind die Mitnehmer 23 des Seitenbandförderers 6 länger als die Mitnehmerorgane 20 des Schleppkettenförderers 2 ausgebildet. Als Rückhaltemittel können anstelle von federnden Klammern 13 beispielsweise auch Bürsten eingesetzt werden.

Auf der Innenseite des Seitenbandförderers 6 sind dessen Förderbänder 24 parallel geführt, so dass die daran angeordneten Mitnehmer 23 die Flaschen 10 in diesem Bereich führen. Die zwischen dem Seitenbandförderer 6 und dem Schleppkettenförderer 2 angeordneten, federnden Klammern 13 sind paarweise ober- und unterhalb der Bahn der Mitnehmerorgane 20 des Schleppkettenförderers 2 angeordnet. Die federnden Klammern 13 weisen, in Förderrichtung 45 gesehen, an ihrem Ende einen nach innen gebogen Teil 14 auf, an welchem die Flaschen 10 zurückgehalten werden. Die Schäfte dieser Klammern 13 sind zudem so ausgebildet, dass sie die Flaschen 10 im Übergabebereich 5 seitlich führen. Um im Übergabebereich 5 vom Anschlussförderer 3 zum Schleppkettenförderer 2 die vertikale Lage der Flaschen 10 zu bestimmen, verläuft das Förderband 3 bis in den Anfangsbereich des Schleppkettenförderers 2. Die seitliche Führung der Flaschen 10 auf dem Förderband 3 wird von parallel zum Förderband 3 verlaufenden Führungsgeländern 26 übernommen.

Am Eingang des Seitenbandförderers 6 werden die Flaschen 10 von den umlaufenden Mitnehmern 23 formschlüssig erfasst und kraftschlüssig mitgenommen. Da ein kraftschlüssiger Transport bereits mit einem relativ kurzen Seitenbandförderer 6 gewährleistet ist, weist dieser nur einen Bruchteil der Gesamtlänge des einlaufseitigen Anschlussförderers 3 auf. Die federnden Klammern 13 am Ausgang des Seitenbandförderers 6 dienen einerseits der seitlichen Führung der Flaschen 10 und stellen durch ihren nach innen gebogenen Teil 14 andererseits sicher, dass die Flaschen 10 zurückgehalten werden und dadurch dicht an dicht zu liegen kommen. Ausserdem werden die Flaschen 10, durch den Förderdruck, an den nach innen gebogenen Teilen 14 der Klammern 13 vertikal ausgerichtet. Sobald der Förderdruck der nachfolgenden Flaschen 10 gross genug ist, wird die vorderste durch die Klammern 13 zurückgehaltene Flasche 10 an den Schleppkettenförderer 2 übergeben.

Die Geschwindigkeit des Schleppkettenförderers 2 ist grundsätzlich höher als die des Seitenbandförderers 6. Dadurch ergibt sich eine Vereinzelung der Flaschen 10 im Schleppkettenförderer 2. Falls die Geschwindigkeit des Schleppkettenförderers 2, wie im vorliegenden Fall angedeutet, doppelt so hoch wie die des Seitenbandförderers 6 ist, stellt sich ein Abstand zwischen den Flaschen 10 ein, der ziemlich genau einem Flaschendurchmesser entspricht.

Zusammenfassend kann somit gesagt werden, dass durch diese Hilfseinrichtungen 6, 13 sichergestellt wird, dass die Flaschen 10 vertikal ausgerichtet und in gleichmässigen Intervallen an den Schleppkettenförderer 2 übergeben werden, und dass die Flaschen 10 im Schleppkettenförderer 2 dadurch einen gleichmässigen Abstand aufweisen.

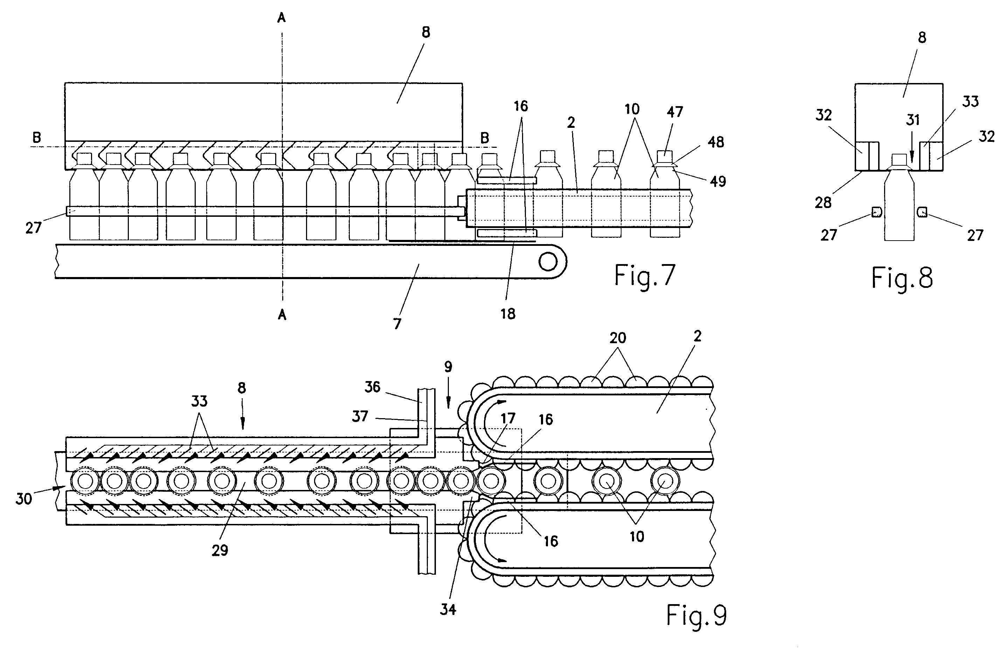

Aus den Fig. 7, 8 und 9 sind die auslaufseitigen Hilfseinrichtungen und Führungsmittel im Flaschen-Übergabebereich 9 ersichtlich. Dabei zeigt Fig. 7 eine schematische Seitenansicht dieses Bereichs, Fig. 8 einen Schnitt entlang der Linie A-A in Fig. 7 und Fig. 9 einen Schnitt entlang der Linie B-B in Fig. 7. Im auslaufseitigen Übergabebereich 9 vom Schleppkettenförderer 2 zum Anschlussförderer 7 sind der pneumatische Förderer 8, Rückhaltemittel in Form von federnden Klammern 16 sowie die vertikale Lage der Flaschen 10 bestimmende Platte 18 angeordnet.

Der pneumatische Förderer 8 dient der Förderung der Flaschen 10 und stellt sicher, dass die Flaschen 10, nach der Vereinzelung im Schleppkettenförderer 2, wiederum dicht an dicht zu liegen kommen. Er weist im wesentlichen eine Bodenplatte 28 mit einem Längsschlitz 29, der als Führungskanal 30 dient, sowie zu beiden Seiten dieses Längsschlitzes 29 angeordnete Fördermittelkanäle 32 auf, welche mit schräg gegeneinander gerichteten Öffnungen 33 in Form von Strahldüsen versehen sind. Die hier schematisch dargestellten PET-Flaschen 10 weisen zwischen dem Flaschenhals 49 und dem Flaschenkopf 47 einen umlaufenden Kragen 48 auf. Die Flaschen 10 werden im pneumatischen Förderer 8 mittels dieses Kragens 48 in den an den Längsschlitz 29 angrenzenden Randpartien 31 der Bodenplatte 28 abgestützt und am Hals 49 geführt. Um die Flaschen 10 vom Schleppkettenförderer 2 an den pneumatischen Förderer 8 zu übergeben, sind im Übergabebereich 9 die Rückhaltemittel 16 angebracht, welche als paarweise ober-und unterhalb der Bahn der Mitnehmerorgane 20 angeordnete, federnde Klammern ausgebildet sind. In diesem Bereich ist auch die Platte 18 angeordnet, welche dazu dient, die Flaschen 10 unmittelbar nach dem Verlassen des Schleppkettenförderers 2 vertikal auszurichten indem die gegenüber dieser Platte 18 im Schleppkettenförderer 2 auf einem etwas höheren Niveau beförderten Flaschen 10, nach der Freigabe durch den Schleppkettenförderer 2, auf diese Platte 18 fallen und mit ihrem Boden aufstehen. Die federnden Klammern 16 dienen dabei der seitlichen Führung der Flaschen 10.

Die Flaschen 10 werden durch die vier Klammern 16 bzw. durch deren nach innen gebogenes Ende 17 zurückgehalten, bis sie durch den Förderdruck der nachfolgenden Flaschen 10 in den pneumatischen Förderer 8 übergeben werden. Um eine sichere Übergabe zu gewährleisten, weist die Bodenplatte 28 des pneumatischen Förderers 8 im Bereich der Klammern 16 zwei Führungslippen 34 auf, welche die Klammern 16 vorzugsweise etwas überlappen. Im Anfangsbereich des pneumatischen Förderers 8 münden zu beiden Seiten Luftkanäle 36 in die Fördermittelkanäle 32. Über diese Luftkanäle 36 wird unter Überdruck stehende Luft 37 eingeblasen, welche die Flaschenköpfe 47 über die Strahldüsen 33 anbläst und die Flaschen 10 dadurch vorwärts bewegt. Bis in den Bereich des ersten Strahldüsenpaares werden die Flaschen 10 dicht an dicht vom Förderdruck des Schleppkettenförderers 2 bzw. der nachfolgenden Flaschen bewegt. Um die Flaschen 10 während des Förderns im pneumatischen Förderer 8 zusätzlich seitlich zu führen, sind Führungsgeländer 27 vorgesehen. Am Ausgang des pneumatischen Förderers 8 schliesst sich das Förderband 7 an.

An Stelle der Klammern 16 sowohl im einlaufseitigen- wie auch im auslaufseitigen Übergabebereich 5, 9, können natürlich auch andere Rückhaltemittel beispielsweise Bürsten vorgesehen sein, wobei die auslaufseitigen Klammern 16 unter Umständen ganz weggelassen oder durch seitliche Führungsgeländer bzw. Bürsten ersetzt werden können. Allenfalls kann auch die Platte 18 weggelassen werden, so dass die Flaschen 10 direkt vom Schleppkettenförderer 2 an den pneumatischen Förderer 8 übergeben werden. Voraussetzung dafür ist, dass die vertikale Position der Flaschen 10 im Schleppkettenförderer 2 relativ genau bestimmt ist und eingehalten wird.

Bei einer solchermassen ausgestalteten Förderanlage 1 ist es vorteilhaft, wenn einige der Hilfseinrichtungen 6, 8, 13, 16, 18 zwischen einer Wirk- und einer Ruhestellung verschoben werden können. Sind die Hilfseinrichtungen 6, 8, 13, 16, 18 in ihre Wirkstellung gebracht, so eignet sich die Anlage für die Förderung von Flaschen 10 mit für eine Bandförderung ungenügender Standfestigkeit wie beispielsweise PET-Flaschen, welche zudem allenfalls einen sternförmigen Boden aufweisen, währenddem sich die Förderanlage 1 für die Förderung von Flaschen mit guter Standfestigkeit, wie beispielsweise Glasflaschen, eignet, nachdem einige oder allenfalls alle Hilfseinrichtungen 6, 8, 13, 16, 18 in ihre Ruhestellung verschoben werden.

Ob und welche dieser Hilfseinrichtungen 6, 8, 13, 16, 18 in ihre Ruhestellung verschoben werden müssen, hängt unter anderem von der Grösse der zu fördernden Flaschen 10 ab. So ist es durchaus möglich, dass bei einer alternierenden Förderung zwischen grossen PET-Flaschen und beispielsweise kleinen Glasflaschen, nur die Rückhaltemittel 13, 16 und der Seitenbandförderer 6 in die Ruhestellung bewegt werden müssen, währenddem bei einer alternierenden Förderung von PET-Flaschen und gleich grossen Glasflaschen auch die beiden pneumatischen Förderer in ihre Ruhestellung bewegt werden müssen. Die pneumatischen Förderer 4, 8 werden dazu vorzugsweise vertikal nach oben verschoben. Um den Seitenbandförderer 6 von der Wirkstellung in die Ruhestellung zu bringen, werden vorzugsweise die beiden Seitenbänder 24 horizontal und quer zur Förderrichtung 45 nach aussen verschoben (Fig. 6). Die Rückhaltemittel 13, 16 und die Platte 18 werden bevorzugt horizontal verschoben oder ganz entfernt. Bei einer kombinierten Förderanlage verlaufen die Förderbänder 3, 7 vorzugsweise auch unter den Hilfseinrichtungen 6, 8, 13, 16, 18 durch, so dass beim Verschieben letzterer, in die Ruhestellung, die Förderbänder 3, 7, welche bevorzugt nur um wenige Millimeter unterhalb der in den pneumatischen Förderern 4, 8 bewegten Flaschen 10 bzw. deren Böden verlaufen, die Förderung in diesen Bereichen übernehmen können.

Die notwendigen Mittel, die für das Bewegen der Hilfseinrichtungen 6, 8, 13, 16, 18 vorhanden sein müssen, sind zugunsten einer übersichtlichen Darstellungsweise nicht eingezeichnet. Da solche Mittel jedoch bekannt sind, braucht darauf nicht näher eingegangen zu werden.

Bei einer alternativen Ausgestaltung der Förderanlage wäre es durchaus auch denkbar, dass das einlaufseitige Förderband 3 weggelassen würde, und dass dafür der pneumatische Förderer 4 bis an den Seitenbandförderer 6 heranreichend ausgebildet würde.

Auf der Auslaufseite könnte das Förderband 7 ebenso weggelassen werden und an seiner Stelle dafür der pneumatische Förderer 8 bis an eine nachfolgende Fördereinrichtung verlängert werden. Eine solchen Anlage würde sich allerdings nur für den Transport von leichten Flaschen eignen, da schwerere Flaschen im allgemeinen nicht mit einem pneumatischen Förderer bewegt werden bzw. werden können.

Abschliessend kann gesagt werden, dass mittels der vorgängig beschriebenen Förderanlage Flaschen mit für eine Bandförderung ungenügender Standfestigkeit sicher befördert und vom einen an den anderen Förderer 3, 2; 2, 7 übergeben werden können. Werden einige oder alle der beschriebenen Hilfseinrichtungen 6, 8, 13, 16, 18 von der eingezeichneten Wirk- in eine Ruhestellung bewegt, so eignet sich diese Förderanlage auch für den Transport von anderen Flaschen wie beispielsweise Glasflaschen.

## Patentansprüche

1. Förderanlage zur Förderung von einseitig offenen Hohlkörpern, insbesondere Flaschen (10), mit einem Hauptförderer (2) für die stetige Förderung einer Folge von gegenseitig beabstandeten Hohlkörpern (10), welcher mit die Hohlkörper (10) ausschliesslich seitlich erfassenden Mitnehmerorganen (20) ausgerüstet ist, sowie mit dem Hauptförderer (2) ein- und auslaufseitig zugeordneten Anschlussförderern (3, 7) für die stetige Förderung dicht aufeinanderfolgender Hohlkörper (10), dadurch gekennzeichnet, dass in den Übergabebereichen (5, 9) vom einlaufseitigen Anschlussförderer (3) zum Hauptförderer (2) und vom Hauptförderer (2) zum auslaufseitigen Anschlussförderer (7) Hilfseinrichtungen (6, 13; 8, 16, 18) angeordnet sind, welche die räumliche Orientierung der Hohlkörper (10) für deren Eingabe in den jeweils nachfolgenden Förderer (2, 7) eindeutig festlegen.

2. Förderanlage nach Anspruch 1, dadurch gekennzeichnet, dass im einlaufseitigen Übergabebereich (5) eine als zusätzlicher Förderer (6) ausgebildete Hilfseinrichtung angeordnet ist, wobei der Förderer (6) mit die Hohlkörper (10) seitlich erfassenden Mitnehmern (23) ausgerüstet ist.

3. Förderanlage nach Anspruch 2, dadurch gekennzeichnet, dass im einlaufseitigen Übergabebereich (5) zusätzliche unter dem Förderdruck nachgebende Mittel (13) zum Zurückhalten der Hohlkörper (10) angeordnet sind.

4. Förderanlage nach Anspruch 2 oder 3, dadurch gekennzeichnet, dass der zusätzliche Förderer (6) als Seitenbandförderer ausgebildet ist, dessen Mitnehmer (23) quer zur Förderrichtung (45) profiliert sind.

5. Förderanlage nach einem der Ansprüche 2 bis 4, dadurch gekennzeichnet, dass die Länge des zusätzlichen Förderers (6) einen Bruchteil der Gesamtlänge des einlaufseitigen Anschlussförderers (3) beträgt.

6. Förderanlage nach einem der Ansprüche 3 bis 5, dadurch gekennzeichnet, dass als Rückhaltemittel (13) federnde Klammern vorgesehen sind, die paarweise ober- und unterhalb der Bahn der Mitnehmerorgane (20) des Hauptförderers (2) angeordnet sind, wobei die federnden Klammern (13) die Hohlkörper (10) zusätzlich seitlich führen.

7. Förderanlage nach einem der vorhergehenden Ansprüche, dadurch gekennzeichnet, dass im auslaufseitigen Übergabebereich (9) eine als pneumatischer Förderer ausgebildete Hilfseinrichtung (8) angeordnet ist.

8. Förderanlage nach Anspruch 7, dadurch gekennzeichnet, dass im auslaufseitigen Übergabebereich (9) zusätzliche unter dem Förderdruck nachgebende Mittel (16) zum Zurückhalten der Hohlkörper (10) angeordnet sind.

9. Förderanlage nach Anspruch 8, dadurch gekennzeichnet, dass als Rückhaltemittel (16) federnde Klammern vorgesehen sind, die paarweise ober- und unterhalb der Bahn der Mitnehmerorgane (20) des Hauptförderers (2) angeordnet sind.

10. Förderanlage nach einem der Ansprüche 7 bis 9, dadurch gekennzeichnet, dass im auslaufseitigen Übergabebereich (9) zusätzlich eine das Hohlkörperniveau bestimmende Platte (18) vorgesehen ist.

11. Förderanlage nach einem der Ansprüche 2 bis 10, dadurch gekennzeichnet, dass die Geschwindigkeit des zusätzlichen Förderers (6) tiefer ist als diejenige des Hauptförderers (2).

12. Förderanlage nach einem der vorhergehenden Ansprüche, dadurch gekennzeichnet, dass die Anschlussförderer (3, 7) je ein Förderband und seitliche Führungsgeländer (26, 27) für die auf dem Förderband (3, 7) stehend beförderten Hohlkörper (10) aufweisen.

13. Förderanlage nach einem der Ansprüche 7 bis 12, dadurch gekennzeichnet, dass der pneumatische Förderer (8) einen in Förderrichtung verlaufenden Führungskanal (30) mit einer Bodenplatte (28) aufweist, die mit einem Längsschlitz (29) zum Einhängen der Hohlkörper (10) versehen ist, wobei die an den Längsschlitz (29) angrenzenden Randpartien (31) der Bodenplatte (28) dazu bestimmt sind, die Hohlkörper (10) am Halskragen (48) abzustützen und am Hals (49) in Förderrichtung zu führen.

14. Förderanlage nach Anspruch 13, dadurch gekennzeichnet, dass der pneumatische Förderer (8) auf der Bodenplatte (28) zwei beiderseits des Längsschlitzes (29) und parallel zum Führungskanal (30) verlaufende Fördermittelkanäle (32) aufweist, welche mit schräg gegeneinander gerichteten Strahldüsen (33) zum Beblasen der Hohlkörper (10) an deren Kopf (47) versehen sind.

15. Förderanlage nach einem der vorhergehenden Ansprüche, dadurch gekennzeichnet, dass einlaufseitig ein vor der/den Hilfseinrichtung(en) (6, 13) angeordneter, pneumatischer Förderer (4) vorgesehen ist.

16. Förderanlage nach einem der Ansprüche 2 bis 15, dadurch gekennzeichnet, dass der einlaufseitige Anschlussförderer ein pneumatischer Förderer (4) ist, der sich bis zum zusätzlichen Förderer (6) erstreckt.

17. Förderanlage nach einem der Ansprüche 2 bis 15, dadurch gekennzeichnet, dass die Hilfseinrichtungen (6, 8, 13, 16, 18) derart ausgebildet und angeordnet sind, dass sie nur beim Einsatz der Förderanlage zur Förderung von Hohlkörpern (10) mit für eine Bandförderung unzureichender Standfestigkeit wirksam sind.

18. Förderanlage nach einem der Ansprüche 2 bis 15, dadurch gekennzeichnet, dass zumindest ein Teil der Hilfseinrichtungen (6, 8, 13, 16, 18) aus einer Wirkstellung in eine Ruhestellung verstellbar angeordnet sind.

19. Förderanlage nach Anspruch 4, dadurch gekennzeichnet, dass die Förderbänder (24) des Seitenbandförderers (6) quer zur Förderrichtung (45) horizontal verschiebbar sind.

20. Förderanlage nach einem der vorhergehenden Ansprüche, dadurch gekennzeichnet, dass im Bereich des auslaufseitigen Anschlussförderers (8) Sensoren (40, 41) zur Überwachung der Länge der aufgestaute Hohlkörper (10) enthaltenden Stauzone (42) angeordnet sind.

21. Förderanlage nach Anspruch 20, dadurch gekennzeichnet, dass die Sensoren (40, 41) die Geschwindigkeit des Hauptförderers (2) zu beeinflussen bestimmt sind.

## Claims

1. Conveying system for conveying hollow bodies which are open on one side, in particular bottles (10), having a main conveyor (2) which is intended for continuously conveying a series of mutually spaced-apart hollow bodies (10) and is equipped with carry-along members (20) which exclusively grip the hollow bodies (10) laterally, and having connection conveyors (3, 7) which are assigned to the inlet and outlet sides of the main conveyor (2) and are intended for continuously conveying hollow bodies (10) which follow closely one after the other, characterized in that auxiliary devices (6, 13; 8, 16, 18) are arranged in the transfer regions (5, 9) from the inlet-side connection conveyor (3) to the main conveyor (2) and from the main conveyor (2) to the outlet-side connection conveyor (7), these auxiliary devices clearly defining the spatial orientation of the hollow bodies (10) for the introduction of the latter into the respectively following conveyor (2, 7).

2. Conveying system according to Claim 1, characterized in that an auxiliary device designed as an additional conveyor (6) is arranged in the inlet-side transfer region (5), the conveyor (6) being equipped with carry-along elements (23) which grip the hollow bodies (10) laterally.

3. Conveying system according to Claim 2, characterized in that additional means (13) which yield under the conveying pressure and are intended for restraining the hollow bodies (10) are arranged in the inlet-side transfer region (5).

4. Conveying system according to Claim 2 or 3, characterized in that the additional conveyor (6) is designed as a side belt conveyor whose carry-along elements (23) are profiled transversely with respect to the conveying direction (45).

5. Conveying system according to one of Claims 2 to 4, characterized in that the length of the additional conveyor (6) is a fraction of the overall length of the inlet-side connection conveyor (3).

6. Conveying system according to one of Claims 3 to 5, characterized in that the restraining means (13) provided are resilient clamps which are arranged in pairs above and beneath the path of the carry-along members (20) of the main conveyor (2), the resilient clamps (13) additionally guiding the hollow bodies (10) laterally.

7. Conveying system according to one of the preceding claims, characterized in that an auxiliary device (8) designed as a pneumatic conveyor is arranged in the outlet-side transfer region (9).

8. Conveying system according to Claim 7, characterized in that additional means (16) which yield under the conveying pressure and are intended for restraining the hollow bodies (10) are arranged in the outlet-side transfer region (9).

9. Conveying system according to Claim 8, characterized in that the restraining means (16) provided are resilient clamps which are arranged in pairs above and beneath the path of the carry-along members (20) of the main conveyor (2).

10. Conveying system according to one of Claims 7 to 9, characterized in that a plate (18) which determines the level of the hollow bodies is additionally provided in the outlet-side transfer region (9).

11. Conveying system according to one of Claims 2 to 10, characterized in that the speed of the additional conveyor (6) is lower than that of the main conveyor (2).

12. Conveying system according to one of the preceding claims, characterized in that the connection conveyors (3, 7) each have a conveying belt and lateral guide railings (26, 27) for the hollow bodies (10), which are conveyed on the conveying belt (3, 7) in an upright position.

13. Conveying system according to one of Claims 7 to 12, characterized in that the pneumatic conveyor (8) has a guide duct (30) which runs in the conveying direction and has a base plate (28) which is provided with a longitudinal slot (29) for the insertion of the hollow bodies (10), the border sections (31), adjoining the longitudinal slot (29), of the base plate (28) being intended for supporting the hollow bodies (10) by the neck collar (48) and for guiding them by the neck (49) in the conveying direction.

14. Conveying system according to Claim 13, characterized in that, on the base plate (28), the pneumatic conveyor (8) has two conveying-means ducts (32) which run on either side of the longitudinal slot (29), parallel to the guide duct (30), and are provided with jet nozzles (33) which are directed obliquely towards one another and are intended for blowing on the head (47) of each of the hollow bodies (10).

15. Conveying system according to one of the preceding claims, characterized in that a pneumatic conveyor (4) arranged upstream of the auxiliary device(s) (6, 13) is provided on the inlet side.

16. Conveying system according to one of Claims 2 to 15, characterized in that the inlet-side connection conveyor is a pneumatic conveyor (4) which extends as far as the additional conveyor (6).

17. Conveying system according to one of Claims 2 to 15, characterized in that the auxiliary devices (6, 8, 13, 16, 18) are designed and arranged such that they take effect only when the conveying system is used for conveying hollow bodies (10) with insufficient stability for belt conveying.

18. Conveying system according to one of Claims 2 to 15, characterized in that at least some of the auxiliary devices (6, 8, 13, 16, 18) are arranged such that they can be adjusted from an operative position into a rest position.

19. Conveying system according to Claim 4, characterized in that the conveying belts (24) of the side belt conveyor (6) can be displaced horizontally and transversely with respect to the conveying direction (45).

20. Conveying system according to one of the preceding claims, characterized in that sensors (40, 41) for monitoring the length of the accumulation zone (42), which contains accumulated hollow bodies (10), are arranged in the region of the outlet-side connection conveyor (8).

21. Conveying system according to Claim 20, characterized in that the sensors (40, 41) are intended for influencing the speed of the main conveyor (2).

## Revendications

1. Appareil transporteur pour le transport de corps creux ouverts d'un côté, en particulier de bouteilles (10), pourvu d'un transporteur principal (2) pour le transport continu d'une succession de corps creux (10) mutuellement espacés, lequel est équipé d'organes d'entraînement (20) saisissant les corps creux (10) exclusivement par le côté, et de transporteurs de raccordement (3, 7) attribués au transporteur principal côté entrée et côté sortie pour le transport continu de corps creux (10) se succédant de près, caractérisé en ce que des dispositifs auxiliaires (6, 13; 8, 16, 18) sont disposés dans les zones de transfert (5, 9) du transporteur de raccordement (3) côté entrée au transporteur principal (2) et du transporteur principal (2) au transporteur de raccordement (7) côté sortie, lesquels dispositifs définissent clairement l'orientation dans l'espace des corps creux (10) pour leur introduction dans le transporteur (2, 7) respectif suivant.

2. Appareil transporteur selon la revendication 1, caractérisé en ce qu'un dispositif auxiliaire conçu comme un transporteur (6) supplémentaire est disposé dans la zone de transfert (5) côté entrée, le transporteur (6) étant équipé d'entraîneurs (23) saisissant les corps creux (10) par le côté.

3. Appareil transporteur selon la revendication 2, caractérisé en ce que des moyens (13) supplémentaires cédant sous la pression de transport sont disposés dans la zone de transfert (5) côté entrée pour retenir les corps creux (10).

4. Appareil transporteur selon la revendication 2 ou 3, caractérisé en ce que le transporteur (6) supplémentaire est conçu comme un transporteur à bande latérale dont les entraîneurs (23) sont profilés transversalement au sens de transport (45).

5. Appareil transporteur selon l'une quelconque des revendications 2 à 4, caractérisé en ce que la longueur du transporteur (6) supplémentaire représente une partie de la longueur totale du transporteur de raccordement (3) côté entrée.

6. Appareil transporteur selon l'une quelconque des revendications 3 à 5, caractérisé en ce qu'on prévoit comme moyens de retenue (13) des crampons élastiques qui sont disposés par paires au-dessus et au-dessous de la trajectoire des organes d'entraînement (20) du transporteur principal (2), les crampons élastiques (13) guidant en supplément les corps creux sur le côté.

7. Appareil transporteur selon l'une quelconque des revendications ci-dessus, caractérisé en ce qu'un dispositif auxiliaire (8) conçu comme un transporteur pneumatique est disposé dans la zone de transfert (9) côté sortie.

8. Appareil transporteur selon la revendication 7, caractérisé en ce que des moyens (16) supplémentaires cédant sous la pression de transport et prévus pour la retenue des corps creux (10) sont disposés dans la zone de transfert (9) côté sortie.

9. Appareil transporteur selon la revendication 8, caractérisé en ce qu'on prévoit comme moyens de retenue (16) des crampons élastiques qui sont disposés par paires au-dessus et au-dessous de la trajectoire des organes d'entraînement (20) du transporteur principal (2).

10. Appareil transporteur selon l'une quelconque des revendications 7 à 9, caractérisé en ce qu'une plaque (18) déterminant le niveau du corps creux est prévue en supplément dans la zone de transfert (9) côté sortie.

11. Appareil de transport selon l'une quelconque des revendications 2 à 10, caractérisé en ce que la vitesse du transporteur supplémentaire (6) est inférieure à celle du transporteur principal (2).

12. Appareil transporteur selon l'une quelconque des revendications précédentes, caractérisé en ce que les transporteurs de raccordement (3, 7) présentent chacun une bande transporteuse et des garde-fous de guidage (26, 27) pour les corps creux (10) transportés debout sur la bande transporteuse (3, 7).

13. Appareil transporteur selon l'une quelconque des revendications 7 à 12, caractérisé en ce que le transporteur pneumatique (8) présente un canal de guidage (30) allant dans le sens de transport avec une plaque de fond (28) qui est pourvue d'une fente longitudinale (29) pour l'accrochage des corps creux (10), les parties périphériques (31) contiguës à la fente longitudinale (29) de la plaque de fond (28) étant destinées à soutenir les corps creux (10) sur la collerette (48) et à les guider sur le col (49) dans le sens du transport.

14. Appareil transporteur selon la revendication 13, caractérisé en ce que le transporteur (8) pneumatique présente sur la plaque de fond (28) deux canaux de moyen de transport (32) disposés des deux côtés de la fente longitudinale (29) et parallélement au canal de guidage (30), lesquels sont pourvus de buses à jet (33) orientées obliquement les unes par rapport aux autres et destinées au soufflage des corps creux (10) sur leur sommet (47).

15. Appareil transporteur selon l'une quelconque des revendications précédentes, caractérisé en ce qu'un transporteur (4) pneumatique disposé en amont de (des) l'appareils (appareils) auxiliaire(s) (6, 13) est prévu côté entrée.

16. Appareil transporteur selon l'une quelconque des revendications 2 à 15, caractérisé en ce que le transporteur de raccordement côté entrée est un transporteur (4) pneumatique qui s'étend jusqu'au transporteur supplémentaire.

17. Appareil transporteur selon l'une quelconque des revendications 2 à 15, caractérisé en ce que les dispositifs auxiliaires (6, 8, 13, 16, 18) sont conçus et disposés de telle façon qu'ils ne sont efficaces que si l'on utilise l'appareil transporteur pour le transport de corps creux (10) avec une stabilité insuffisante pour un transport par bande.

18. Appareil transporteur selon l'une quelconque des revendications 2 à 15, caractérisé en ce qu'au moins une partie des dispositifs auxiliaires (6, 8, 13, 16, 18) sont disposés de façon à pouvoir passer d'une position active à une position de repos.

19. Appareil transporteur selon la revendication 4, caractérisé en ce que les bandes transporteuses (24) du transporteur à bande latérale (6) sont déplaçables horizontalement transversalement au sens de transport (45)

20. Appareil transporteur selon l'une quelconque des revendications précédentes, caractérisé en ce que des capteurs (40, 41) pour le contrôle de la longueur de la zone de retenue (42) contenant des corps creux (10) accumulés (10) sont prévus dans la zone du transporteur de raccordement (8) côté sortie.

21. Appareil transporteur selon la revendication 20, caractérisé en ce que les capteurs (40, 41) sont destinés à influencer la vitesse du transporteur principal (2).
